# EUROPÄISCHE PATENTANMELDUNG

(11) **EP 1 081 606 A2**
(43) Veröffentlichungstag der Anmeldung: **07.03.2001**
(21) Anmeldenummer: 00117404.4
(22) Anmeldetag: 11.08.2000
(51) Int. Cl.: G06F 17/30

(54) **Verfahren und Displaymaus zur Navigation innerhalb eines Netzwerkes von Rechnern**

(30) Priorität: 19.10.1999 DE 29918265 U; 23.03.2000 DE 10014173; 31.08.1999 DE 29915155 U; 18.05.2000 DE 20008783 U
(71) Anmelder: comMouse AG, 78549 Spaichingen (DE)
(72) Erfinder: Teufel, Thomas, 78549 Spaichingen (DE)
(74) Vertreter: Geitz, Holger

(57) **Zusammenfassung**

Die innerhalb eines Rechnernetzwerks üblicherweise angebotene bzw. zur Verfügung stehende Information ist derart unübersichtlich und vielschichtig, daß der Bedarf nach Verfahren und Vorrichtungen einer verbesserten Navigation innerhalb derartiger Netzwerke besteht.

Die Erfindung betrifft ein Verfahren, bei dem ein Benutzer ein Informationsprofil auf einem Ereignisportal innerhalb des Rechnernetzwerks hinterlegen kann und aufgrund des hinterlegten Informationsprofils zeit- oder ereignisgesteuert mit dem Informationsprofil entsprechenden schlagwortartigen Informationen auf einem in Verbindung mit dem Rechnernetzwerk betriebenen eindeutig identifizierbaren Datensichtgerät versorgt wird. Neben der Information wird eine der schlagwortartigen Information zugeordnete Presse übermittelt, so daß mittels eines einzigen Tastendrucks zum Zeitpunkt schlagwortartigen Informationen zum weiteren selbsttätig, die jeweiligen Informationen zugeordnete Adresse innerhalb des Rechnernetzwerks aufgerufen werden kann.

Das vorstehend erläuterte Verfahren in Verbindung der erfindungsgemäßen Vorrichtung erlaubt somit den gezielten Aufruf gewünschter Informationen mittels eines einzigen Tastendrucks.

## Beschreibung

Die Erfindung betrifft ein Verfahren und eine Vorrichtung zur Navigation innerhalb eines Netzwerkes von Rechnern.

Im Zusammenhang mit einer zunehmenden Vernetzung unserer elektronischen Welt besteht ein zunehmender Bedarf der damit wachsenden Informationsflut Herr zu werden. Hierzu bedient sich der Nutzer innerhalb derartiger Netzwerke zunehmend nicht nur eines Browsers, der ihm die Navigation im Internet ermöglicht, sondern vielmehr werden die Browser mit sogenannten Internetportalen gekoppelt, die die zunächst unübersichtliche Informationsflut segmentieren und dem Benutzer es so ermöglichen, gezielt die ihn interessierenden Informationssegmente anzusteuern und auszuwählen.

Es ist ihm hierdurch möglich, mit entsprechenden Suchmaschinen in Verbindung mit den genannten Informationsprofilen innerhalb der Netzwerke etwaig gewünschte Inhalte aufzufinden.

Es entspricht ferner dem Stand der Technik, daß die entsprechenden Suchmaschinen nicht nur zum Auffinden der betreffenden Inhalte genutzt werden, sondern in Form von Links bzw. Hyperlinks einen unmittelbaren Sprung von der aufgefundenen Information bzw. der Zusammenfassung der Information zur Information selbst ermöglichen. Dies gelingt in der Regel dadurch, daß der betreffende Link beispielsweise mittels eines Mouseklicks oder eines Mousedoppelklicks ausgewählt und hierdurch dem Browser die Auswahl der entsprechenden Adresse beispielsweise im Internet der entsprechenden URL signalisiert wird. Der Browser ruft dann die entsprechende Seite bzw. den betreffenden Speicherinhalt innerhalb des Netzwerks auf.

In Verbindung mit entsprechenden intelligenten Such- und Filterfunktionen kann der Benutzer auch eine Vorkonfigurierung eines Browsers derart vornehmen, daß mittels hinterlegter Informations- und Suchprofile im Falle der Aktivierung des Browsers gezielt bestimmte Informationen aufgerufen werden.

Zunehmend zeichnet sich jedoch ab, daß der Zugang zu den gezeigten Rechnernetzwerken nicht nur über Rechner, sondern auch über einfachere, insbesondere kleinere und handlichere Geräte erfolgen soll. Herkömmliche Browser sowie die beschriebene Bedienung der Internetportale geht jedoch weiterhin von einem Zugriff auf diese Portale mittels eines Rechners oder eines vergleichbaren Eingabegerätes aus. Somit kann auf derartige Portale in Verbindung mit anderen Dateneingabegeräten wie beispielsweise Handys, die inzwischen über das WAP-Protokoll internetfähig sind, nicht auf derartige Portale zugegriffen werden. Es werden daher zunehmend spezielle Portale für den Zugang über Protokolle, wie beispielsweise dem Wireless Application Protokoll (WAP) geschaffen, die einen sinnvollen Zugang in derartige Rechnernetze auch über Geräte wie beispielsweise Handys ermöglicht. WAP ermöglicht die Übertragung von textbasierten Internetinhalten. Jedenfalls benötigen sie spezielle Eingangspakete für das jeweilige Netzwerk.

Allen beschriebenen Konzepten ist jedoch der Nachteil gemeinsam, daß es sich um passive Konzepte handelt. Dies bedeutet, daß die in den Rechnernetzwerken enthaltenen Informationen als passive Datenmenge verstanden werden, auf die mehr oder minder gezielt aktiv zugegriffen werden muß.

Der Erfindung liegt die Aufgabe zugrunde, ein Verfahren und eine Vorrichtung zur Navigation in Rechnernetzwerken zu schaffen, das die Kommunikation und den Zugriff auf die in einem Rechnernetzwerk enthaltenen interessierenden Informationen erleichtert und einen verbesserten Bedienkomfort bietet. Diese Aufgabe wird durch ein Verfahren gemäß Anspruch 1 sowie eine Vorrichtung gemäß Anspruch 10, insbesondere zur Durchführung des Verfahrens, gelöst.

Bei dem erfindungsgemäßen Verfahren wird zunächst eine Informationsdatenbank angelegt, die in ihrer Funktion den beschriebenen Internetportalen entspricht. Die Datenbank enthält Elemente, die zumindest eine Information, den Zeitpunkt der Informationseinspielung sowie eine der Information jeweils zugehörige Adresse innerhalb des Netzwerkes enthalten. Darüber hinaus kann dem oder den Datenbankservern von jedem Nutzer jeweils ein individuelles Informationsprofil zugewiesen bzw. bekannt gemacht werden. Im Unterschied zum Stand der Technik wird diese Datenbank in Verbindung mit einer Routine betrieben, die selbsttätig entsprechend dem individuellen Informationsprofil des Nutzers die betreffende Datenbank überprüft und im Falle von Treffern diese selbsttätig auf einem oder mehreren diesem Nutzer zugeordneten Datensichtgerät bzw. Datensichtgeräten zur Anzeige bringt. Das Profil dient demnach nicht zur Auswahl bereits vorhandener Informationen wie bei Suchmaschinen, sondern zur Selektion künftiger, erwarteter Informationen.

Durch das erfindungsgemäße Verfahren wird somit die in einem Rechnernetzwerk 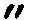 schlummernde" Information aktiviert. Etwaig in Abhängigkeit von einem individuell hinterlegten Informationsprofil interessierende Informationen werden zeitnah und aktuell auf einem dem Nutzer zugänglichen Datensichtgerät zur Anzeige gebracht. Das Rechnernetzwerk ist somit als potentieller Informationspool aktiviert.

Die Navigation innerhalb eines Netzwerks wie dem Internet auf Seiten des Nutzers wird dadurch weiter wesentlich erleichtert, daß dem Datensichtgerät eine Rechnereinheit mit einem Überwachungsmodul und einer Eingabeeinheit zugeordnet ist, wobei das Überwachungsmodul die Eingabeeinheit auf eine etwaige Betätigung hin überwacht. Sobald die Eingabeeinheit betätigt wird, stellt das Überwachungsmodul fest, welche Information zu diesem Zeitpunkt auf dem Datensichtgerät zur Anzeige gebracht wurde. Die Betätigung der Eingabeeinheit wird dann als Auswahl der Information aufgefaßt, wobei dann selbsttätig ein Browser gestartet und die der Information zugehörige Adresse (URL) innerhalb des Netzwerkes angewählt wird. Durch diese vorteilhafte Ausgestaltung des erfindungsgemäßen Verfahrens kann die Navigation innerhalb eines Netzwerkes von Rechnern mittels eines Gerätes erfolgen, daß nur über eine einzige Taste verfügt. Die Erfindung ermöglicht eine sogenannte 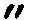 One―Click―Navigation" innerhalb des Internets oder eines Intranets.

Das zur Auswahl der Informationen konfigurierbare Informationsprofil wird mit Vorteil auf dem oder den Datenbankservern abgelegt. Aufgrund der Hinterlegung des Informationsprofils auf einem mit der Datenbank in Verbindung stehenden Server, der das sogenannte Ereignisportal bedient, muß der betreffende Filter nicht vom Nutzer selbst vorgehalten werden, so daß, nachdem der Filter einmal hinterlegt ist, das betreffende Informationsprofil zur Auswahl der Informationen aus der Informationsdatenbank auch von Eingabegeräten genutzt werden kann, die ansonsten weder zur Speicherung noch zur Konfigurierung eines Informationsprofils geeignet sind.

Die dem Informationsprofil entsprechenden Informationen können entweder zu vorgebbaren Zeitpunkten oder im Falle eines ständig sich online innerhalb eines Rechnernetzwerkes befindlichen Datensichtgerätes auch sofort in Echtzeit mittels eines geeigneten Polling-Verfahrens, das den Server regelmäßig nach etwaig dem Informationsprofil entsprechenden Informationen abprüft, oder jeweils immer dann, wenn das entsprechende Datensichtgerät 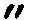 ans Netz" geht, zur Anzeige gebracht werden. Es sind demnach unterschiedliche Betriebsarten für die angeschlossenen Datensichtgeräte definierbar.

Neben der schlagwortartigen Darstellung der Information kann gleichzeitig ein Klangsignal auf dem Datensichtgerät oder über ein mit dem Datensichtgerät verbundenes Gerät eingespielt werden, je nachdem welches der genannten Geräte über eine Soundkarte zur Verarbeitung entsprechender Audio-Dateien verfügt.

Das Eventportal ist mit Vorteil als segmentierte Datenbank aufgebaut. Dies bedeutet, daß eine Klassifikation der angebotenen Information in Kategorien erfolgt. Ist einmal die betreffende Klassifikation der Datenbank erfolgt, so kann diese Segmentierung wiederum dafür genutzt werden, dem Nutzer die Anlage der individuellen Nutzerprofile zu erleichtern. Beispielsweise kann der Benutzer in Form eines Menüs, das in Frage und Antwort aufgebaut ist, abgefragt werden, welche Informationen bzw. Informationssegmente für ihn relevant sind.

Die Informationsdatenbank kann entweder zentral vom Anbieter der Informationsdatenbank oder dezentral von hierzu angeschlossenen Content-Providern gepflegt werden. Die Motivation der Content-Provider zur Pflege der Informationsdatenbank liegt darin, daß sie durch die beschriebene Aktivierung der in der Informationsdatenbank enthaltenen Information quasi in eine ständige Kommunikation mit den angeschlossenen Benutzern treten können.

Die für die Formulierung der Nutzungsprofile beschriebene Filtertechnik kann umgekehrt auch zur Pflege der von den genannten Content-Providern gelieferten Daten dahingehend genutzt werden, daß eine ähnliche Filterfunktion, wie schon erläutert, die von den Content-Providern gelieferten Speicherinhalte überwacht und diese entweder in Abhängigkeit der auf dem Informationsdatenbankserver hinterlegten User-Profile oder in Abhängigkeit von einem sonstigen Filter gezielt Inhalte der von den Content-Providern belieferten Speicherplätze auswählt, diese konvertiert und schließlich selbsttätig in die Informationsdatenbank einpflegt. Hiermit ist ein System der selbsttätigen Aktualisierung und Pflege der Informationsdatenbank beschrieben.

Die Zuordnung der vom Eventportal individuell an die Benutzer übermittelten Informationen zu dem jeweils zugehörigen Benutzer erfolgt zunächst geräteabhängig mittels einer von einem ID―Chip gelieferten, vorzugsweise verschlüsselten Gerätekennung, die beim Einloggen mit dem jeweiligen Datensichtgerät in das Ereignisportal ausgewertet wird.

Die vorstehend erläuterte Authentifikation kann dadurch weiter verbessert werden, daß die Geräte―ID den Zugang nur in Verbindung mit einem eindeutigen Passwort ermöglicht. Hierdurch ist höchste Vertraulichkeit der vom Eventportal gelieferten Informationen gewährleistet, da die Verschlüsselung der Geräte ID nur portalseitig bekannt und nur von hier entschlüsselt werden kann. Die Informationsübertragung erfolgt aber erst, wenn sowohl Passwort als auch die Geräte-ID den berechtigten Benutzer ausweisen. Es handelt sich demnach um ein mehrstufiges Sicherheitssystem, wobei an keiner Stelle die erforderliche Gesamtinformation, zum Zugang für einen Zugriff in Verbindung miteinander abgelegt ist.

Das vorstehend erläuterte Passwortsystem gestattet übrigens die Verwendung eines einzigen Datensichtgerätes durch mehrere Personen, wobei dann über das Passwort das entsprechende Informationsprofil angefordert wird. Der Passwortschutz dient demnach gleichzeitig zur Verwaltung unterschiedlicher Nutzerprofile.

Die der Erfindung zugrundeliegende Aufgabe eine Vorrichtung zur Navigation in Rechnernetzwerken zu schaffen, die die Kommunikation und den Zugriff auf die in diesem Rechnernetzwerk enthaltenen Informationen erleichtert und zugleich ein verbesserten Bedienkomfort bietet wird auch mit einer Displaymaus gemäß den Merkmalen des Anspruchs 10 gelöst.

Unter einer Displaymaus ist zunächst ein herkömmlich Computermaus zu verstehen, die zusätzlich um eine integrierte Anzeigevorrichtung erweitert ist. Die Displaymaus weist wenigstens eine Eingabeeinheit auf, die im Falle der Darstellung einer für den jeweiligen Benutzer interessanten Information betätigbar ist. Entsprechend der Betätigung der Eingabeeinheit zum Zeitpunkt einer schlagwortartigen Informationsdarstellung wird die in Verbindung mit der dargestellten Information übermittelte Rechnernetzwerkadresse, vorzugsweise eine URL, nach Start eines entsprechenden Browserprogrammes aufgerufen und somit dem Benutzer die zugehörige, vollständige und aktuelle Information darzustellen.

Die Displaymaus wird üblicherweise in Verbindung mit einem Rechner betrieben. Sie weist jedoch eine eigene Rechnereinheit auf, die nach dem Anschluß der Displaymaus an ein entsprechendes Gerät die Anschlüsse und Installationen des angeschlossenen Gerätes überprüft und somit etwaige Modems, ISDN-Karten oder sonstige Internet- oder Intranetschnittstellen erkennt. Im Rahmen einer ersten Initialisierung zumindest in Verbindung mit einer der erkannten Schnittstellen wird eine Einwählroutine angelegt, die dann selbsttätig oder abrufbar zur Verfügung steht. Überdies ist sichergestellt, daß im Falle der vorstehend erläuterten Darstellung einer etwaig interessierenden Information ein selbsttätiges Aufrufen der in Verbindung mit der jeweiligen Information übermittelten Internet― oder Intranetadresse möglich ist.

In vorteilhafter Ausgestaltung genügt demnach ein einziger Tastendruck zum Zeitpunkt der schlagwortartigen Informationsdarstellung, um zu der vollständigen Information zu gelangen. Das unter dem Schlagwort 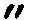 surfen" etwas verniedlichend bezeichnete 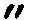 umständliche Suchen" innerhalb des gesamten Internets kann somit auf einen einzigen Tastendruck reduziert werden.

Voraussetzung ist lediglich, daß vorher ein entsprechend geeignetes individuelles Informationsprofil hinterlegt wurde.

Die schlagwortartige Informationsdarstellung erfolgt aufgrund einer ständigen Überprüfung der an dem Ereignisportal anstehenden Informationen im Vergleich zur Definition der gemäß dem Informationsprofil als relevant hinterlegten Informationen. Die Abfrage des Ereignisportals kann zeit- intervall- oder ereignisgesteuert erfolgen. Dies bedeutet, daß die Maus entweder ein ständiges Polling―Verfahren zu einer echten Realtime Informationserfassung durchführt oder in regelmäßigen zeit― oder sonstigen Intervallen das Ereignisportal abfragt.

Bedarfsweise kann auch lediglich beim Einloggen einer Dieplaymaus im betreffenden Netzwerk eine Abfrage des Ereignisportals einmalig erfolgen. Eine derartige Abfrage wird als ereignisgesteuert bezeichnet, wobei auch andere Ereignisse eine entsprechende Abfrageroutine auslösen können.

Anstelle des zentralen Ereignisportals können auch gezielt bestimmte Informationsportale wie beispielsweise Online-Banking― oder Börseninformationen abgefragt werden. Zusammen in Verbindung mit diesen Informationen könnte die ereignisabhängige Informationsabfrage bzw. Informationsüberspielung wichtig werden. So kann bei Unter― oder Überschreiten eines vorgebbaren Limits eines überwachten Aktiendepots oder einzelner Aktien eine entsprechende schlagwortartige Information an den User erfolgen. In diesem Falle wird also das Portal von sich aus aktiv und spricht die etwaig angeschlossenen User, sofern sie sich in dem angeschlossenen Rechnernetzwerk befinden, direkt an.

Im Zusammenhang mit den Bemühungen um einen gesicherten elektronischen Zahlungsverkehr hat es sich in Verbindung mit Kreditkarten oder electronic-cash ein Verfahren bewährt, daß im Geschäft an speziellen Terminals nach Eingabe der zur Identifikation des jeweiligen Benutzers erforderlichen Informationen, beispielsweise eines PIN's, der Zahlungsverkehr grundsätzlich freigegeben wird, aber aus Sicherheitsgründen wird jeweils vor der endgültigen Zahlung der zur Bezahlung vorgesehene Betrag in einem Display angezeigt und die eigentliche Zahlung erst nach einer erneuten Bestätigung durch den Benutzer freigegeben.

In Verbindung mit der erfindungsgemäßen Displaymaus können nun etwaige im Wege des Online-Bankings oder sonstiger Internet- oder Intranettransaktionen durchgeführte Bezahlvorgänge dadurch gesichert werden, daß die jeweils aufgerufene Onlinebank den zur Bezahlung angewiesenen Betrag aktiv auf dem Display der Displaymaus zur Anzeige bringt, wobei die Bezahlung erst dann erfolgt bzw. freigegeben wird, wenn der auf diesem Wege angesprochene Benutzer den betreffenden Betrag durch Tastendruck zur Bezahlung freigibt.

In vorteilhafter Ausgestaltung ist die Displaymaus als hochwertige Computermaus mit einer berührungslosen Bewegungsdetektion versehen. Derartige Computermäuse haben sich gegenüber den herkömmlichen 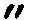 Mausball―Versionen" als überlegen erwiesen, da sie aufgrund ihrer kontaktfreien Bewegungserfassung nahezu wartungs- und verschleißfrei sind.

Die Displaymaus ist mit einem ID-Chip ausgestattet, der eine eindeutige Gerätekennung im vorliegenden Fall eine eindeutigen Mauskennung aufweist. Die Gerätekennung ist verschlüsselt, so daß im weiteren von einem Krypto-ID-Chip die Rede sein wird. Im Falle des Einloggens mit einer derart ausgestatteten Maus ist demnach die betreffende Maus eindeutig authentifiziert. Es handelt sich dabei um einen Hardware-Code.

Eine eindeutige Authentifikation auch des Benutzers ist dadurch gewährleistet, daß neben der eindeutigen Mauskennung ein Benutzerpasswort verlangt wird, bevor ein ordnungsgemäßes Einloggen am Ereignisportal erfolgt ist.

Die Authentifikation des Benutzers erfolgt also sowohl über einen Hardware―Code, nämlich die Mauskennung, und einen Software-Code, nämlich dem Benutzerpasswort. Das Benutzerpasswort kann dabei bevorzugt über entsprechende Eingabeeinheiten der Maus eingegeben werden. Die entsprechend ausgestaltete Displaymaus eignet sich somit nicht nur zur Abfrage eines Ereignisportals, sondern ist auch als Identifikations- und Authentifikationsgerät in Verbindung mit Rechnernetzwerken hervorragend geeignet.

Der Benutzer loggt sich quasi über den Anschluß der entsprechenden Displaymaus in das Rechnernetzwerk mit seinem entsprechenden Nutzerprofil ein. Die Verwendung eines Passwortschutzes ermöglicht es einer einzigen Maus unterschiedliche Benutzerprofile zuzuordnen. So kann beispielsweise innerhalb einer Abteilung eine Maus mehreren Mitarbeitern zugeordnet werden bzw. unterschiedlichen Mäusen unterschiedliche Zugangsberechtigungen zugewiesen werden.

In abermals vorteilhafte Ausgestaltung ist die Maus mit einem Mikrofon zum Empfang und zur Umsetzung von Sprachbefehlen versehen.

Die Maus selber kann mit den erforderlichen Schnittstellen im Anschluß an ein Intra- oder Internet versehen sein. Die Maus kann daher unabhängig von einem Rechner als Internet bzw. Intranet―Navigations bzw. Sichtgerät genützt werden.

In Verbindung mit einer Set―Top―Box können Fernseher mit einem Internet oder Intranet verbunden sein und mittels des Fernsehers im Internet navigiert werden. Dabei kann die Displaymaus als drahtlose Fernbedienung eingesetzt werden.

Beispielsweise können bestimmte Programmempfehlungen auf das Display der erfindungsgemäßen Maus eingespielt werden und durch einen Tastendruck die betreffende Sendung aufgerufen werden. Dies ist dadurch ermöglicht, daß ebenso wie in Verbindung mit den schlagwortartigen Informationen Internetadressen übermittelt werden auch Ausstrahlungsfrequenzen im Fernsehbereich übermittelt werden können, so daß der betreffende Sendekanal eingeschaltet werden kann.

In vorteilhafter Ausgestaltung erfolgt auch die Auswahl der vorgeschlagenen Sendungen bzw. der auf dem Display angezeigten Handy-Informationen in Verbindung mit dem bei dem Ereignisportal hinterlegten Nutzungsprofil.

Die Displaymaus kann ferner mit einer Mobilfunkempfangseinheit sowie einer entsprechenden autarken Stromversorgung vorzugweise in Form eines Metallhybrid-Akkus, versehen sein. Sie ist gewissermaßen als Handy-Displaymaus zu bezeichnen.

In einer alternativen Ausgestaltung ist das Gehäuse der Displaymaus derart zweiteilig aufgebaut, daß die Anzeigevorrichtung als solche gelenkig mit dem Bediengehäuse verbunden ist und somit gegenüber dem Bediengehäuse verschwenkbar ist. Dies hat den Vorteil, daß das Display zu keinem Zeitpunkt von der Hand des Benutzers verdeckt ist und somit jederzeit eingesehen werden kann. Dies ist insbesondere in Verbindung mit besonders wichtigen Informationstools wie beispielsweise Bank― oder Börseninformationen bedeutsam.

In vorteilhafter Ausgestaltung dieser Weiterbildung ist das mit dem Bediengehäuse verbundene Displaygehäuse an seiner Breitseite mit einem Display und an der Schmalseite mit dem Objektiv einer Kamera versehen. Die Displaymaus ist somit als hochwertige im Strahlgang des Objektivs angeordneten Scanner-Einrichtung ausgestaltet, wobei die gescannten Informationen auf dem Display sofort zur Anzeige gelangen können.

In vorteilhafter Ausgestaltung ist das Drehgelenk, daß das Displaygehäuse mit dem Bediengehäuse verbunden ist, mit einem Kontaktschalter verbunden, der auf die Fokussierung der Kamera derart einwirkt, daß zwischen einer Nah― und einer Fernfokussierung der Kamera selbsttätig umgeschaltet werden kann. Dies bedeutet, daß an einer Schwenkstellung des Displaygehäuses bei der die Schmalseite des Displaygehäuses auf ein unmittelbar unter der Maus angeordnetes Dokument weist, die Nahfokussierung zugeschaltet ist und in einer Schwenkstellung, bei der die Schmalseite in den Raum beispielsweise auf den Benutzer weist, die Fernfokussierung eingeschaltet ist. Die Umschaltung zwischen der Nah- und Fernfokussierung stellt sogleich eine Umschaltung zwischen der Scannfunktion und der Kamerafunktion dar. Beispielsweise kann die auf den Benutzer gerichtete fernfokussierte Kamera in Verbindung mit Anwendungen, wie etwa der Internet-Telefonie, genutzt werden.

Hierzu ist es vorteilhaft, wenn innerhalb des Gehäuses auch ein Lautsprecher und ein Mikrofon angeordnet ist.

Darüber hinaus sind die entsprechenden Software―Tools zum Aufruf und zur Abwicklung der Internet-Telefonie in der mit der Rechnereinheit der Displaymaus verbundenen Speichereinheit abgelegt.

Schließlich ist die Displaymaus auch mit der erforderlichen Bildbearbeitungs-Software versehen, um die von der Scannereinheit gelieferten Bildinformationen hochwertig verarbeiten zu können.

Anstelle der Kamera kann auch ein hochwertiges optoelektronisches System in dem Displaygehäuse eingebaut sein, so daß beispielsweise eine Irisabtastung und ―auswertung zur Benutzeridentifikation ermöglicht ist. Abermals ist somit die Displaymaus als hochwertiges und vielseitig verwendbares Identifikationsgerät ausgestaltet. Durch eine entsprechende Ausgestaltung der Displaymaus kann somit anstelle umständlicher Zugangskontrollen an Gebäuden der Zugang zu sicherheitsrelevanten Informationen durch Vergabe entsprechend eindeutig und hochwertig gesicherter Displaymäuse erfolgen.

Neben der Bilderkennung sollte in Verbindung mit der erfindungsgemäßen Displaymaus auch eine Texterkennungs―Software vorgesehen sein, um etwaig eingescannte Texte in Textverarbeitungen, Tabellenkalkulationen oder sonstige Anwendungen einbinden zu können.

In einer weiteren alternativen Ausgestaltung weist die Displaymaus eine Vorrichtung zum Einlesen und/oder Auslesen von Informationsträgerkarten auf.

Die entsprechend ausgestaltete Maus kann in dieser Ausgestaltung somit erneut als Zugangskontrolleinrichtung, aber auch als Lesegerät für übliche Informationsträgerkarten genutzt werden. Beispielsweise kann mittels der Displaymaus der auf einer Geldkarte gespeicherte Betrag ausgelesen werden, ob zum Lesen freigegebener Daten einer Krankenkassenkarte.

Hierzu ist das Gehäuse der Displaymaus mit einem Aufnahmeschacht für die entsprechenden Informationsträgerkarten versehen.

Ein wichtiges Sicherheitsmerkmal für die Verarbeitung von Informationsträgerkarten ist, daß während des Lesevorganges an der Informationsträgerkarte keinerlei Manipulationen möglich sind. Hierbei ist es vorteilhaft, wenn die Informationsträgerkarte vollständig in dem Aufnahmeschacht der Displaymaus aufgenommen und somit für den Zeitraum des Lesevorgangs jedem Zugriff entzogen ist.

In jedem Falle sollte der Aufnahmeschacht mit einem Betätigungselement zum Auswurf der Informationsträgerkarte versehen sein. Ein derartiges Betätigungselement hat den Vorteil, daß es insbesondere dann verriegelt sein kann, wenn Lesevorgänge oder sonstige Vorgänge, die empfindlich auf Unterbrechungen reagieren, ablaufen.

Insbesondere können mittels einer entsprechend ausgestalteten Displaymaus personenbezogene Daten von Informationsträgerkarten bezogen werden.

In diesem Falle ist es sinnvoll, daß die Displaymaus etwaig auf der Informationsträgerkarte angeordnete Sicherheitsschlüssel oder PIN-Codierungen verwerten und auslesen kann.

Die Erfindung wird nachstehend anhand einiger in der Zeichnung näher dargestellte Ausführungsbeispiele erläutert. Es zeigen:
- Fig. 1: ein Blockschaltbild eines Ereignisportals zur Durchführung des erfindungsgemäßen Verfahrens,
- Fig. 2: eine Displaymaus in einer Draufsicht,
- Fig. 3: die Displaymaus nach Fig. 2 in einer Seitenansicht,
- Fig. 4: in den Fig. 2 und 3 gezeigte Displaymaus in einer Vorderansicht,
- Fig. 5: eine Displaymaus mit separatem Displaygehäuse in einer Draufsicht,
- Fig. 6: eine Handymaus in einem Querschnitt,
- Fig. 7: die in Fig. 6 gezeigte Handymaus in einer Draufsicht,
- Fig. 8: eine Fernbedienungsmaus im Querschnitt,
- Fig. 9: die in Fig. 8 gezeigte Fernbedienungsmaus im Querschnitt,
- Fig. 10: eine Informationsträgerkartenmaus in einer Draufsicht und
- Fig. 11: die in Fig. 10 gezeigte Informationsträgerkartenmaus in einer Seitenansicht.

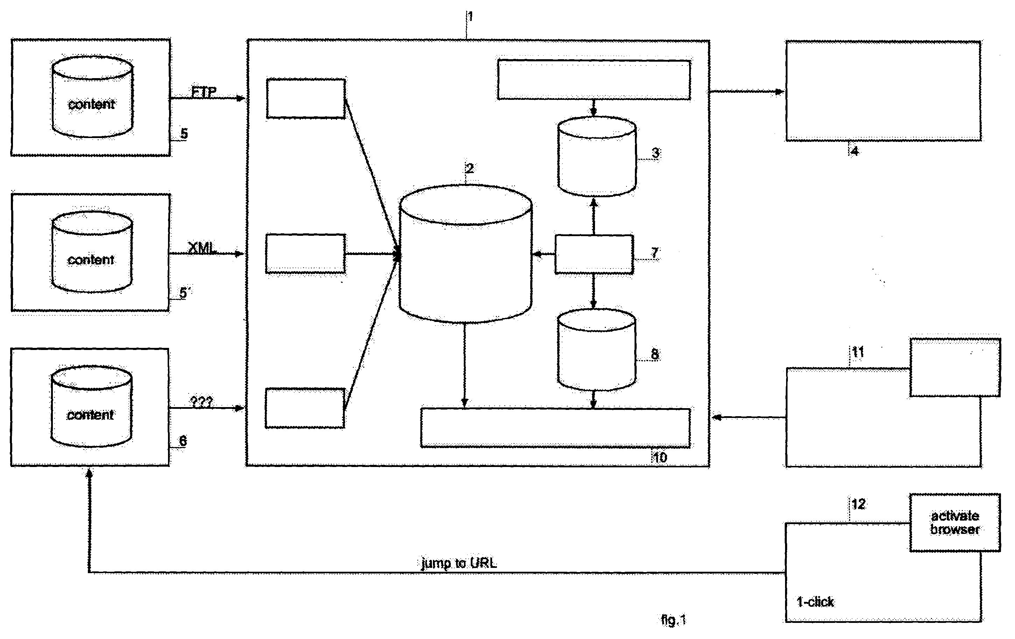

Fig. 1 zeigt ein Blockschaltbild für das erfindungsgemäße Verfahren. Im Zentrum des erfindungsgemäßen Verfahrens steht ein Ereignisportal 1, das im wesentlichen einen Dokumentenserver mit einer Reihe von nachstehend noch näher zu erläuternden Funktionen darstellt. Zentrales Element des Ereignisportals 1 ist eine Informationsdatenbank 2, die im Wesentlichen eine Sammlung von Intranet- bzw. Internetadressen bzw. sogenannten Links umfaßt. Diese Informationsdatenbank wird in Verbindung mit einem Informationsprofil 3 von den angeschlossenen Nutzern 4 über ein geeignetes Protokoll beispielsweise HTTP oder TCP/IP erzeugt, angelegt und auf dem Ereignisportal 1 hinterlegt. Das Ereignisportal 1 stellt dabei bevorzugt eine in Verbindung mit einem geeigneten Server betriebene Homepage innerhalb eines Internets oder Intranets dar. Die in den Informationsdatenbank 2 abgelegten Daten werden von aktiven Content―Providern 5,5' bedient. Content-Provider stellen dabei in einfachster Ausgestaltung über ein geeignetes Protokoll z.B. FTP oder XML die jeweiligen Links zur Verfügung, die über geeignete Schnittstellen in die Informationsdatenbank 2 eingepflegt werden. Die Convertierung kann dabei selbsttätig und automatisch erfolgen. Das Ereignisportal 1 kann auch in Verbindung mit passiven Content-Providern 6 betrieben werden.

Hierunter sind Provider zu verstehen, die nicht von sich aus die erwähnten Informationen, sondern vielmehr erst auf Abfrage zur Verfügung stellen. Die Abfrage passiver aber auch aktiver Content-Provider kann dabei mittels entsprechender Filterprogramme erfolgen, die jeweils überprüfen, ob eine für die Informationsdatenbank 2 relevante Information vorliegt. Hierzu können entsprechende Polling― Verfahren zwischen dem Server der Informationsdatenbank 2 und den Content―Providern 5,5' oder 6 installiert sein.

Das erfindungsgemäße Verfahren gestaltet sich nach der Hinterlegung des Informationsprofils 3 wie folgt:

Der angeschlossene Benutzer 4 wählt sich bei dem Ereignisportal 1 ein. Dabei kann eine Überprüfung des Benutzers über eine entsprechende Benutzerkennung erfolgen. Die Benutzerkennung wird üblicherweise durch die Kombination einer Hardware-ID, die dem von dem Benutzer 4 eingesetzten Gerät zugeordnet ist, und einer Software―ID, die üblicherweise über ein vom Benutzer freiwählbares Passwort hergestellt wird, erkannt. Aus dem von dem Benutzer beim der Informationsdatenbank 2 zugehörigen Server, hinterlegten Benutzerprofil 3 wird dann ein Abfrageskript 7 generiert, daß im Falle von aufgrund des Informationsprofils 3 als relevant bewerteter Informationen, die Übertragung von schlagwortartigen Benutzerinformationen generiert, die an das jeweils abfragende Skript zurückgeliefert werden, sowie zur Übermittlung, die entsprechenden Links in Verbindung mit diesen Informationen überträgt. Sowohl die Links, also vorzugsweise URL-Adressen, wie auch die schlagwortartigen Benutzerinformationen werden über eine geeignete Benutzerschnittstelle 10 in verschlüsselter oder unverschlüsselter Form an das von dem Benutzer benutzte Datensichtgerät 11 zurückgegeben. Das Datensichtgerät 11 weist wenigstens ein Bedienelement sowie eine Rechnereinheit auf. Die Rechnereinheit umfaßt ein Überwachungstool zur Erkennung des Zeitpunktes der angebotenen Information, die vom Benutzer 4 mittels des Datensichtgerätes 11 über die zugeordnete Bedieneinheit ausgewählt wurde und startet dann einen integrierten oder zugeordneten Browser um, um bei den jeweiligen Content―Providern 5,5', 6 durch Anwahl der entsprechenden Internet- bzw. Intranetadresse, die der schlagwortartigen Benutzerinformation zugeordnete Adresse anzuwählen und somit dem Benutzer für das Datensichtgerät 11 oder ein sonstiges in Verbindung mit dem Datensichtgerät 11 betriebenes Gerät die vollständige Informationsanzeige zur Verfügung zu stellen.

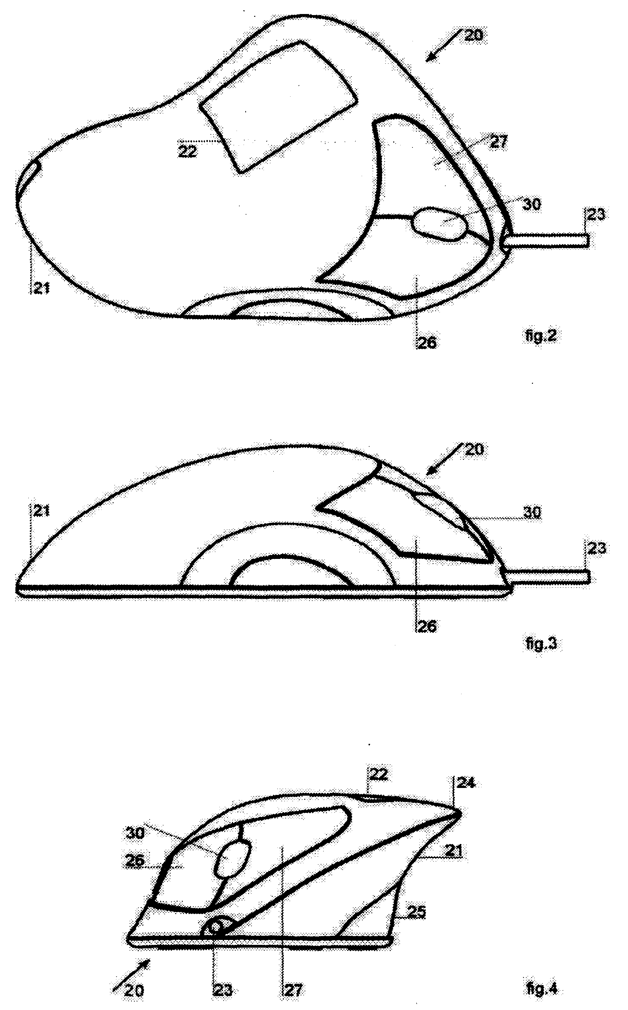

Ein in Verbindung mit dem in Fig. 1 dargestellten Verfahren sinnvolles Datensichtgerät stellt die in den Fig. 2 bis 4 gezeigte Displaymaus 20 dar. Die Displaymaus 20 besteht im Wesentlichen aus einem Gehäuse 21, in das ein Display 22 integriert ist. Die Datenübertragung zwischen der Displaymaus 20 und einem möglicherweise angeschlossenen Rechner erfolgt drahtlos über eine entsprechende Sende― und Empfangseinheit 23. Das Display 21 ist ergonomisch geformt, wobei die insbesondere in Fig. 4 dargestellte ausladende Flanke 24 zur Auflagerung des Daumenballens dient. Im Bereich unterhalb der Flanke 24 ist dann dem Daumen selbst ein als Internet-Button 25 bezeichnendes Bedienelement zugeordnet. Darüber hinaus weist die Displaymaus weitere Bedientasten 26, 27 und ein Scrollrad 30 auf. Die Bedientasten 26 und 27 entsprechen der rechten und linken Maustaste bei herkömmlichen 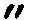 Mäusen".

Das Scrollrad 30 dient zur Navigation in den bei vielen Windows-Anwendungen erscheinenden Scroll-Balken.

Die in den Fig. 2 bis 4 dargestellte Displaymaus 20 weist ferner eine Speicher-, Rechner- und Prozessoreinheit auf, so daß es sich bei der Displaymaus 20 um eine sogenannte 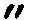 intelligente" Maus handelt, die auch ohne Anschluß an einen Rechner funktionsfähig ist. Schließlich ist die Displaymaus 20 mit einem nicht bildlich dargestellten Krypto-ID―Chip versehen, das in verschlüsselter Form eine eindeutige Gerätekennung enthält.

Die Displaymaus 20 kann in vorteilhafter Weise in Verbindung mit dem vorstehend beschriebenen Verfahren, wie folgt, benutzt werden:

Der Benutzer kann in Verbindung mit einem Rechner oder in Alleinstellung über die Sende― und Empfangseinheit mit dem Ereignisportal 1 in Datenverbindung treten. Dabei werden in Abhängigkeit von anderen festgelegten Parametern auf dem Display 22 schlagwortartig Informationen dargestellt, die aufgrund eines Ereignisportals 1 hinterlegten Informationsprofils der jeweiligen Displaymaus 20 zugeordnet werden. Die Zuordnung des im Ereignisportal 1 hinterlegten Informationsprofils zu der jeweiligen Displaymaus 20 erfolgt in Abhängigkeit von der Gerätekennung die von dem in der Maus integrierten ID-Chip geliefert wird. Neben der Authentifizierung des Datensichtgeräts kann zusätzlich eine Benutzerkennung beispielsweise auch in Verwendung von Benutzerprofilen durch ein eindeutiges Passwort ermöglicht sein.

Sobald der Einloggmechanismus zu der sogenannte 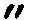 shake hands" zwischen dem Ereignisportal 1 und der Displaymaus 20 stattgefunden hat, werden zu vorgegebenen Zeitpunkten beim Einloggen oder in Abhängigkeit von einem speziellen Polling-Verfahren die aufgrund des Informationsprofils relevanten Informationen in Form von Schlagworten auf dem Display 22 dargestellt. Der Benutzer 4 hat dann die Möglichkeit durch Betätigung des Internet―Buttons 25 zum Zeitpunkt der dargestellten Information die der Information zugehörige Internet- oder Intranetadresse vorzugsweise eine URL unmittelbar anzuwählen. Dazu wird entweder ein in der Maus abgelegter Browser oder ein in einem mit der Displaymaus 20 in Datenverbindung stehendes Gerät mit einem entsprechenden Browser so aktiviert, daß die in Verbindung mit der schlagwortartigen Information gelieferte Intranet- bzw. Internetadresse aufgerufen und somit die vollständige Information vorzugsweise auf einem in Verbindung mit der Displaymaus 20 betriebenen Datensichtgerät zur Anzeige gebracht wird. Das Display 22 dient demnach bevorzugt zur Darstellung ausgewählter Sonderinformationen. Bei einem Display kann es sich um ein LCD―Matrix―Display handeln, so daß auch Grafiken dargestellt werden können. Beispielsweise kann der Verlauf eines Aktiendepots ständig im Display angezeigt werden. Zusätzlich können je nach Informationsprofil auch ereignisgesteuerte Informationen, beispielsweise das Überschreiten eines Aktienlimits auf dem Display 22 zur Anzeige gelangen.

Selbstverständlich ist das vorstehend beschriebene Verfahren nicht auf eine Displaymaus gemäß den Fig. 2 und 4 beschränkt.

Grundsätzlich kann das erfindungsgemäße Verfahren in Verbindung mit jedem Datensichtgerät betrieben werden. Zur Anwahl der auf dem Datensichtgerät dargestellten Information ist es allerdings vorteilhaft, wenn wenigstens eine einzige Bedientaste vorhanden ist. Die Verwendung einer Displaymaus 20 hat den Vorteil, daß ein in Verbindung mit dem Rechner sowieso erforderliches Peripherigerät zur Darstellung der Zusatzinformation getrennt von den sonstigen Informationen genutzt wird.

Die erfindungsgemäße Displaymaus 20 kann darüber hinaus aufgrund der eindeutigen Gerätekennung und dem integrierten Display zur weiteren bemerkenswerten Funktionen genutzt werden. So können beispielsweise Bezahlvorgänge dadurch sicherer abgewickelt werden, daß Banken die im Wege eines elektronischen Bezahlvorganges Zahlungsanweisung Ihres Kunden erhalten, eine entsprechende Information an den Benutzer 4 übermitteln. Der zur Überweisung anstehende Betrag wird dann im Display 22 angezeigt und erst nach Freigabe über den Internet―Button 25 zur Zahlung angewiesen. Die Abwicklung von Bezahlvorgängen kann demnach über die Displaymaus 20 in ähnlicher Form erfolgen, wie dies beispielsweise in Verbindung mit e-cash-Zahlungen im Kaufhaus oder an der Tankstelle geläufig ist. Der entscheidende Unterschied zu den vorbekannten Geräten liegt hier darin, daß die Bestätigung von Bezahlvorgängen auf einem dem Kunden individuell zugeordneten Geräte erfolgt. Dies ist deshalb möglich, weil die Verwendung einer Hardware-ID in Verbindung mit einer Software-ID einen gesicherten Kanal zur Abwicklung derartiger Vorgänge zwischen der Displaymaus 20 und den angeschlossenen Banken ermöglicht.

Aufgrund dieses gesicherten Kanals können in ähnlich einfacher Weise auch Bestellungen ausgeführt und bestätigt werden.

Die eindeutige Identifikation des Benutzers in Verbindung mit der Displaymaus 20 läßt die Displaymaus auch zu einem bevorzugten Identifizierungsinstrument werden.

Neben den in Fig. 2 bis 4 gezeigten Ausführungen der Displaymaus sind in Ausrichtung auch zum Teil andere wünschenswerte Funktionalitäten weitere Ausführungen der Displaymaus entwickelt worden.

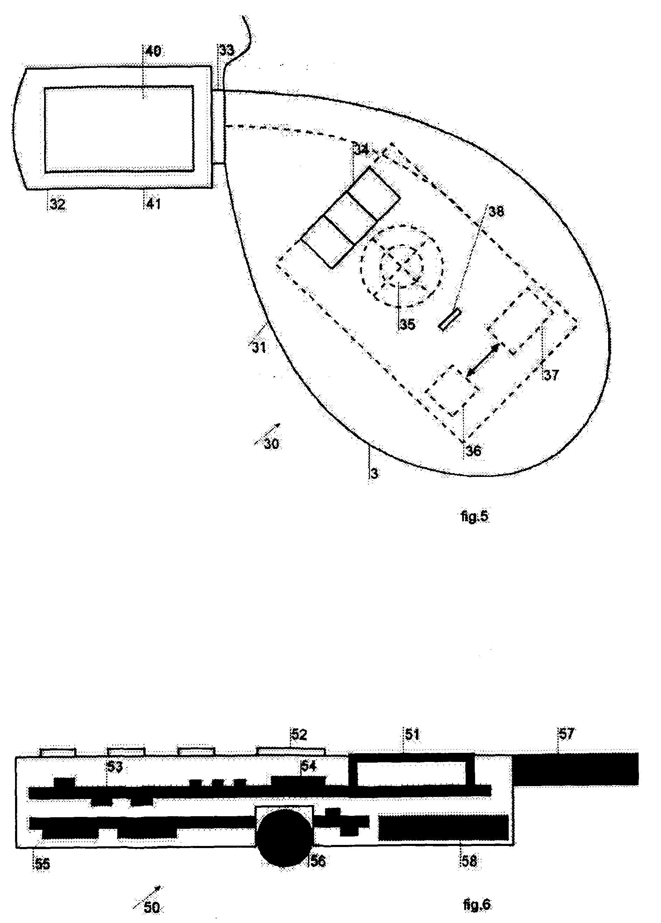

So weist die in Fig. 5 dargestellte Displaymaus 30 ein zweiteiliges Gehäuse auf. Dieses umfaßt im Wesentlichen ein Bediengehäuse 31 sowie ein Displaygehäuse 32. Das Displaygehäuse 32 ist mit dem Bediengehäuse 31 vorzugsweise über ein Drehgelenk 33 verbunden. Das Displaygehäuse 32 kann somit relativ zum Bediengehäuse 31 verschwenkt werden.

Das Bediengehäuse 31 weist oberseitig zur Erfüllung der herkömmlichen Mausfunktion die üblichen Maustasten 34 auf. Unterseitig ist das Bediengehäuse 31 mit einem Mausball 35 versehen, dessen Rotation mittels optoelektronischer und induktiver Messungen erfaßt und in hier nicht weiter interessierender Weise zur Cursorsteuerung eingesetzt wird. Innerhalb des Bediengehäuses 31 ist zusätzlich eine Prozessoreinheit 36 mit einem zugeordneten Speicherelement 37 angeordnet, die wechselseitig miteinander in Datenverbindung stehen. Darüber hinaus ist ein ID-Chip 37 im Innern des Bediengehäuses 31 angeordnet.

Das Displaygehäuse 32 ist auf seiner Breitseite mit einem Matrix-Display 40 versehen. Dabei kann es sich um ein handelsübliches 132 x 64 Pixeldisplay wie beispielsweise für Mobilfunktelefone handeln. Derartige Displays sind eingeschränkt grafikfähig.

An der Stirnseite des Displaygehäuses 32 ist in hier nicht weiter dargestellter Weise ein Kameraobjektiv 41 angeordnet. Das Kameraobjektiv 41 ist im Strahlgang eines Tubus in dem verschiedene Linsen sowie eine Foto-Bit-Kamera angeorndet sind, befestigt. Bei der Foto-Bit-Kamera kann es sich um einen handelsüblichen CMOS-Baustein handeln. Sämtliche genannten optischen Bauteile sind innerhalb des Displaygehäuses 32 angeordnet.

Das Bediengehäuse 31 ist vorzugsweise über eine USB― Schnittstelle, auch drahtlos in Form eines Infrarotausgangs mit einem Computer oder einem sonstigen Datenverarbeitungsgerät verbindbar.

Die vorstehend erläuterte Kamera-Displaymaus 30 kann benutzt werden, um Texte, Strichcodes oder Bilder aufzunehmen, bzw. einzuscannen. Hierzu wird das Displaygehäuse 32 so verschwenkt, daß die das Kameraobjektiv 41 enthaltende Stirnseite des Gehäuses in Richtung eines Textes oder eines Bildes weist, das üblicherweise unterhalb der Displaymaus 30 angeordnet ist. Zur sofortigen Bild- oder Textverarbeitung kann innerhalb der Speichereinheit 10 eine Bildbearbeitungssoftware bzw. OCR-Texterkennung abgelegt sein. Die erwähnten Informationen können in dem Display 40 zur Anzeige gebracht werden.

Durch das Verschwenken des Displaygehäuses 32 relativ zum Bediengehäuse 31 kann zwischen verschiedenen Betriebsmodi der Displaymaus 30 hin- und hergeschaltet werden. Für den Fall, daß das Displaygehäuse 31 so verschwenkt wird, daß das Kameraobjektiv 41 in den Raum oder beispielsweise auf den Benutzer gerichtet ist, wird auf eine Fernfokussierung umgeschaltet. Ansonsten ist das Kameraobjektiv auf eine Nahfokussierung ausgerichtet.

Mit einem auf den jeweiligen Benutzer gerichteten Kameraobjektiv 41 kann die Displaymaus 30 zur Internet-Telefonie benutzt werden. Hierzu ist in der Prozessoreinheit 36 und in der Speichereinheit 37 eine zur Internet-Telefonie geeignete Software abgelegt. Üblicherweise arbeitet die Displaymaus in diesem Modus mit der ISDN-Schnittstelle oder dem Modem eines angeschlossenen Computers. Die Displaymaus 30 kann dabei beispielsweise für Videokonferenzen eingesetzt werden, da mittels der Displaymaus 30 sowohl Bilder als auch Texte übermittelt werden können, wie Bilder der jeweiligen Gesprächspartner. In vorteilhafter Ausgestaltung ist die Displaymaus 30 zusätzlich mit einem Lautsprecher oder einem Mikrofon versehen.

Eine eigens als Handymaus 50 ausgestaltete Displaymaus ist in Fig. 6 gezeigt. Auch die Handymaus umfaßt eine LCD Matrix-Display 51, sowie diverse Mausbedientasten 52. Auch diese Maus kann in Verbindung mit einem Scrollrad ausgeliefert werden. Die Displaymaus ist über eine bidirektionale Datenleitung mit einem hier nicht weiter dargestellten PC verbindbar. Anstelle der Datenleitung 6 kann auch ein kabelloser Datenaustausch ermöglicht sein.

Wie aus der Querschnittsdarstellung ersichtlich ist innerhalb des Gehäuses der Handymaus 50 eine Platine 53 mit einem Microcontroller 54 angeordnet. Die genannte Platine weist eine serielle Schnittstelle zum Anschluß der erwähnten bidirektionalen Datenleitung auf. Die hier nicht weiter dargestellte serielle Schnittstelle kann auch durch eine Infrarot-Schnittstelle ersetzt sein. Die Handymaus weist zusätzlich ein innerhalb des Gehäuses 55 gelagerten Mausball 56 mit einer sich bekannten Bewegungsdetektion auf. Anstelle des Mausballs 56 können auch Hall-Elemente oder sonstige zur Bewegungsdetektion geeignete Elemente insbesondere zur kontaktfreien Bewegungserfassung vorgesehen sein.

Auch bei der Handymaus 50 kann das Handydisplay 51 dafür benutzt werden, die vom Ereignisportal 1 gelieferten Informationen in Abhängigkeit vom Informationsprofil 3 darzustellen. Im Unterschied zu herkömmlichen Displaymäusen weist die Handymaus 50 zusätzlich eine Funkantenne 57 sowie einen Akku 58, insbesondere einen Lidium-Ionen-Akkusatz, auf. Die Handydisplaymaus 50 ist somit um die Funktionalität einer Mobilfunkempfangseinrichtung erweitert. Sämtliche von der Displaymaus empfangenen und angezeigten sowie von hier erzeugten Informationen können per Funk empfangen, gesendet und weiter vermittelt werden. Die Vorteile der Handydisplaymaus liegen vorwiegend in der ortsungebundenen Einsatzmöglichkeit.

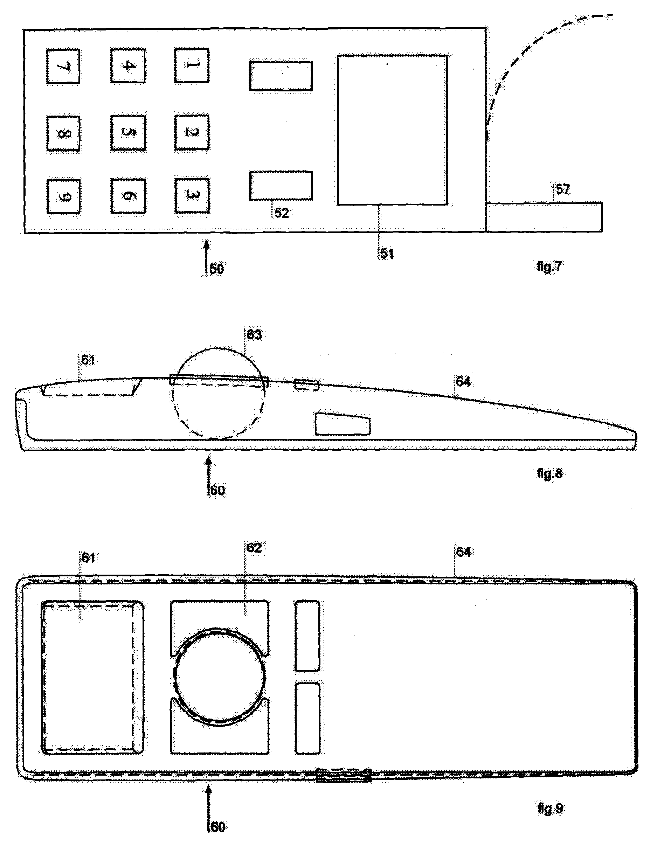

Fig. 7 zeigt die Handymaus 50 in einer Draufsicht.

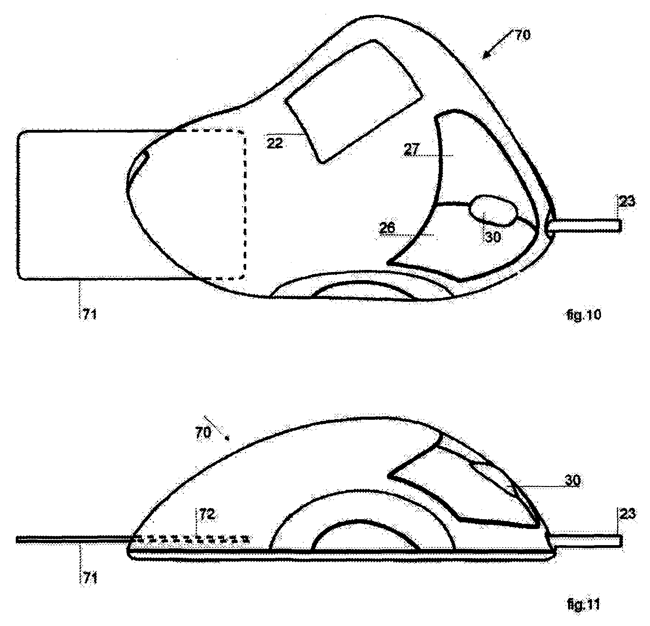

In den Fig. 8 und 9 ist die Displaymaus als intelligente Fernbedienungsmaus 60 ausgestattet.

Dabei weist auch die Fernbedienungsmaus 60 ein Display 61 sowie die üblichen Mausbedienungstasten 62 auf. Die Cursorsteuerung erfolgt bei der Fernbedienungsmaus 60 mittels eines an sich bekannten Trackballs 63. Die Cursorsteuerung via-Trackball kehrt das Maussteuerungsprinzip dahingehend um, daß nicht mit der Maus ein Mausball bewegt wird, sondern vielmehr der Trackball 63 drehbar in einem Mausgehäuse 64 gelagert ist und dieser Trackball 63 relativ zum Mausgehäuse 64 bewegt wird. Darüber hinaus weist die Fernbedienungsmaus 60 Sende- und Empfangseinrichtungen zur drahtlosen Fernbedienung und zum drahtlosen Datenaustausch auf, die hier nicht weiter dargestellt sind.

In Verbindung mit sogenannten Set―Top―Boxen können herkömmliche Fernseher derart aufgerüstet werden, daß diese Geräte als Internet―Empfangs― und Sendegeräte benutzt werden können. Dazu liefert die Set-Top-Box notwendigen Internet-Zugang sowie die erforderliche Browser―Software und übernimmt eine Konvertierung, daß die Darstellung der vom Browser empfangenen und gelieferten Informationen auf dem Bildschirm ermöglicht. Mittels des Internetzugangs über die Set-Top-Box kann auch die intelligente Fernbedienungsmaus 60 auf das Ereignisportal 1 zugreifen, bzw. von diesem angesteuert werden. So können im Ereignisportal 1 beispielsweise Sende― und Fernsehinformationen in Abhängigkeit von dem hinterlegten Informationsprofil 3 an die Fernbedienungsmaus 60 übermittelt werden. In einfachster Ausgestaltung handelt es sich dabei um die Anfangstermine der von dem jeweiligen Benutzer 4 bevorzugten Sendungen. Immer wenn eine derartige Sendung kurz vor der Ausstrahlung steht, erscheint eine entsprechende schlagwortartige Information auf dem Display 61 der Fernbedienungsmaus.

Es genügt dann, mittels einer der die Maustasten 62 die in diesem Falle ihrer Funktion nach dem Internet-Button 25 entspricht, die der jeweiligen Sendeinformation zugehörige Sendung einzuschalten. Hierzu muß die Fernbedienungsmaus 60 mit den zur Fernbedienung eines herkömmlichen Fernsehers erforderlichen Infrarot-Fernbedienungsignalen versehen sein und mit der Sendeinformation die Informationen zur Auswahl und Einschaltung des betreffenden Kanals übermittelt werden. In bevorzugter Ausgestaltung wird also anstatt einer Internetadresse eine Sendefrequenzinformation an die Fernbedienungsmaus 60 übermittelt. Die Fernbedienungsmaus 60 verfügt jedoch im übrigen über die gleiche Funktionalität wie die vorstehend erläuterten Displaymäuse 20, 30 und 50 und kann somit in Verbindung mit der erwähnten Set-Top-Box und dem Fernseher als Internetnavigationsgerät in Verbindung mit dem erfindungsgemäßen Verfahren eingesetzt werden. Somit ist auch die Fernbedienungsmaus 60 mit einem entsprechenden ID-Chip sowie einer Prozessoreinheit und einem Speicherelement versehen.

Eine weitere Ausbildung der Displaymaus in diesem Falle als sogenannte Informationsträgerkartenmaus 70 ist in den Fig. 10 und 11 gezeigt. Dabei entspricht die Informationsträgerkartenmaus zunächst in den Fig. 2 bis 4 dargestellten Displaymaus, wobei für übereinstimmende Merkmale übereinstimmende Bezugszeichen gewählt wurden. Informationsträgerkartenmaus 70 zeichnet sich gegenüber der in den Fig. 2 bis 4 dargestellten Ausführungen durch einen zusätzlichen Kartenleser für Informationsträgerkarten 71 aus. Die Informationsträgerkartenmaus 70 ist hierzu mit einem Aufnahmeschacht 72 versehen, dem ein herkömmlicher Kartenleser nicht weiter dargestellter Weise zugeordnet ist.

Mittels des Kartenlesers können die auf der Informationsträgerkarte gespeicherten Informationen ausgelesen und über die in der Informationsträgerkartenmaus 70 enthaltene Prozessoreinheit in Verbindung mit der angeschlossenen Speichereinheit auch ausgewertet werden. Dabei können einzelne auf der Informationsträgerkarte 71 dargestellte Informationen direkt auf dem Display 22 zur Anzeige gelangen. Derartige Informationsträgerkarten werden insbesondere im Krankenkassenbereich zur Speicherung der Krankenkasseninformationen sowie einzelne Patientendaten eingesetzt. Nachdem, wie vorstehend erläutert, die Informationsträgerkartenmaus mit einer eindeutigen Gerätekennung versehen ist, ist hier ein zusätzlicher Sicherheitsaspekt gegeben. Die Informationsträgerkarte 71 kann beispielsweise von der Krankenkasse so konfiguriert werden, daß die Karte nur von solchen Informationsträgerkartenmäusen 70 gelesen werden kann, die zugelassenen Kassenärzten zugewiesen wurden. Darüber hinaus kann über die Anzeige 22 sichergestellt sein, daß der Patient jeweils verfolgen kann, welche Daten von der Informationsträgerkarte 71 bezogen werden. Alternativ ist auch denkbar, daß der Patient selbst die entsprechende Maus mitbringt und über das Display 22 die zur Übermittlung an den Arzt vorgesehenen Informationen über die Bestätigungstaste 25 freigibt.

Die Kartenleseeinrichtung der Informationsträgerkartenmaus 70 kann selbstredend auch in Verbindung mit herkömmlichen Geldkarten, ec-Karten eingesetzt werden. Beispielsweise ist es auch denkbar, die Informationsträgerkartenmäuse 70 fest mit einem bestehenden Rechnernetz zu verdrahten und den Zugang zu diesem Rechnernetz über die Informationsträgerkartenmaus 70 in Abhängigkeit von der über die Informationsträgerkarte eingelesenen Informationen zu gestatten, zu verweigern oder in bestimmtem Umfang zu gestatten. Die Informationsträgerkartenmaus 70 ist auch in diesem Falle ein Instrument für einen gesicherten Zugang zu bestehenden Rechnernetzwerken eingesetzt.

Nach alledem ist vorstehend ein Verfahren zur Internetnavigation beschrieben, daß eine bessere Verwaltung und einen erhöhten Bedienkomfort in Verbindung mit dem nahezu übersehbaren Informationspool von Rechnernetzwerken gestattet. Zur Durchführung dieses Verfahrens sind diverse Displaymäuse vorgeschlagen, die je nach Ausrichtung unterschiedliche Funktionalitäten bieten, die jedoch alle gemein haben, daß mit einem einzigen Tastengriff die jeweils gewünschte Information aus dem angeschlossenen Rechnernetzwerk abrufbar ist. Dabei erfolgt das Informationsangebot und die Informationsübertragung jeweils in Abhängigkeit eines voreinstellbaren Benutzerprofils und in Abhängigkeit eines gesicherten Zugangs.

Somit ist ein Verfahren zur Navigation in einem Rechnernetzwerk beschrieben, das hinsichtlich seiner Funktionalität stark verbessert und seiner Bedienbarkeit drastisch vereinfacht ist.

### BEZUGSZEICHENLISTE

- 1: Ereignisportal
- 2: Informationsdatenb ank
- 3: Informationsprofil
- 4: Benutzer
- 5,5': aktive Content-Provider
- 6: passiver Content-Provider
- 7: Abfrageskript
- 8: Benutzerinformatio n
- 9,9',9'': Provider Schnittstelle
- 10: Benutzer Schnittstelle
- 11: Datensichtgerät
- 12: Bedienelement
- 20: Displaymaus
- 21: Mausgehäuse
- 22: Display
- 23: Sende- und Empfangseinrichtung
- 24: Mausflanke
- 25: Internetbutton
- 26,27: Bedientasten
- 28: Scrollrad
- 30: Displaymaus
- 31: Bediengehäuse
- 32: Displaygehäuse
- 33: Drehgelenk
- 34: Bedientasten
- 35: Mausball
- 36: Prozessoreinheit
- 37: Speichereinheit
- 40: Display
- 41.: Kameraobjektiv
- 50: Handymaus
- 51: Handydisplay
- 52: Bedientasten
- 53: Platine
- 54: Microcontroller
- 55: Gehäuse
- 56: Mausball
- 57: Funkantenne
- 58: Akku
- 60: Fernbedienungsmaus
- 61: Display
- 62: Maustaste
- 63: Trackball
- 70: Informationsträgerkartenmaus
- 71: Informationsträgerkarte
- 72: Aufnahmeschacht

## Patentansprüche

1. Verfahren zur Navigation innerhalb eines Netzwerkes von Rechnern, wobei jedem Rechner und/oder bestimmten Datensätzen innerhalb dieses Netzwerkes eindeutige Adressen zugewiesen sind, bei dem auf wenigstens einem Server wenigstens eine Informationsdatenbank (2) angelegt ist, deren Elemente jeweils wenigstens eine Information, einen Zeitpunkt der Informationseinspielung sowie eine der Information zugehörige Adresse innerhalb dieses Netzwerkes enthalten und diese Information in Abhängigkeit der Korrelation mit einem, vorzugsweise auf dem Server oder den Servern, hinterlegten Informationsprofil (3) eines Benutzers (4) auf einem oder mehreren diesem Benutzer (4) zugeordneten Datensichtgeräten (11, 20, 30, 50, 60, 70) zur Anzeige gebracht wird.

2. Verfahren nach Anspruch 1, dadurch gekennzeichnet, daß dem Datensichtgerät (11, 20, 30, 50, 60, 70) eine Rechnereinheit (36) mit einem Überwachungsmodul und eine Eingabeeinheit derart zugeordnet ist, daß das Überwachungsmodul die Eingabeeinheit in zeitlicher Beziehung zur jeweils angezeigten Information überwacht und im Falle einer Betätigung der überwachten Eingabeeinheit dieses Ereignis der zu diesem Zeitpunkt angezeigten Information eindeutig zuordnet und hierdurch ein auf der Rechnereinheit (36) lauffähiger Browser aktiviert und mittels dieses Browsers die der Information zugehörige Adresse innerhalb des Netzwerks angewählt wird.

3. Verfahren nach Anspruch 1 oder 2, dadurch gekennzeichnet, daß das Informationsprofil (3) des Benutzers (4) als, vorzugsweise von dem Benutzer (4) selbst, individuell konfigurierbarer Filter auf dem oder den Datenbankservern, die als Ereignisportal (1) dienen, angelegt wird.

4. Verfahren nach einem der vorhergehenden Ansprüche, dadurch gekennzeichnet, daß die dem Informationsprofil (3) jeweils entsprechenden Informationen zu vorgebbaren Zeitpunkten, sofort und/oder sobald das entsprechende Datensichtgerät (11, 20, 30, 50, 60, 70) Online geht, vorzugsweise in Form einer, einer jeden Information zugeordneten Schlagwortinformation, vorzugsweise mittels eines Pop―Up―Menüs, zur Anzeige gebracht werden.

5. Verfahren nach einem der vorhergehenden Ansprüche, dadurch gekennzeichnet, daß in Verbindung mit der Internetadresse eine Audio-Datei, vorzugsweise eine WAV-Datei, an ein oder mehreren diesem Benutzer (4) zugeordneten Datensichtgeräten (11, 20, 30, 50, 60, 70) übermittelt wird und zum Zeitpunkt der Informationsdarstellung ein charakateristisches Klangsignal mittels einer dem oder den Datensichtgerät/en zugeordneten Soundkarte abgespielt wird.

6. Verfahren nach einem der vorhergehenden Ansprüche, dadurch gekennzeichnet, daß es sich bei der Informationsdatenbank (2) um eine segmentierte Datenbank derart handelt, daß die in der Datenbank aufgenommenen Informationen klassifiziert sind, wobei die Segmente der Informationsdatenbank wiederum zur Anlage der individuellen Informationsprofile (3) der Benutzer (4) eingesetzt werden.

7. Verfahren nach einem der vorhergehenden Ansprüche, dadurch gekennzeichnet, daß das Einpflegen der von etwaig an das Ereignisportal (1) angeschlossenen Content-Providern (5, 5', 6) gelieferten Informationen derart selbsttätig erfolgt, daß von den Content-Providern (5, 5', 6) hierzu freigegebbare Speicherinhalte mittels eines Filterprogramms derart überwacht werden, daß im Falle der Korrelation mit einem vorgegebenen Filter die solcherart ausgewählten Daten selbsttätig in das für die Informationsdatenbank (2) erforderliche Format konvertiert und schließlich diese konvertierten Daten selbsttätig in die Informationsdatenbank (2) eingestellt werden.

8. Verfahren nach einem der vorhergehenden Ansprüche, dadurch gekennzeichnet, daß mittels eines ID-Chips, der eine verschlüsselte eindeutige Gerätekennung aufweist, eine Authentifikation der sich bei dem Ereignisportal einloggenden Datensichtgeräte (11, 20, 30, 50, 60, 70) derart erfolgt, daß beim Aufbau der Datenübertragung die Gerätekennung mit übertragen wird.

9. Verfahren nach Anspruch 8, dadurch gekennzeichnet, daß jeder Gerätekennung ein oder mehrere Passworte zugeordnet werden und von dem oder Servern des Ereignisportals (1) in Verbindung mit den individuell hinterlegten Informationsprofilen (3) verwaltet werden und diese beim Einloggen in das Ereignisportal (1) abgefragt werden.

10. Displaymaus zur Computerbedienung und Informationsdarstellung, insbesondere zur Durchführung eines Verfahrens nach einem oder mehreren der vorhergehenden Ansprüche, mit
- einem Bewegungsdetektor, der kontinuierlich oder in vorgegebenen Zeitabständen seine jeweilige Position relativ zu einer Oberfläche bei einer Bewegung erfaßt und in elektronische, eine Information über die Bewegung enthaltene Signale umwandelt,
- einer Rechnereinheit (36), welche die elektronischen Signale des Bewegungsdetektors in Positionsanzeigen in einem zwei- und/oder dreidimensionalen visuellen System, etwa in die Positionierung eines Cursors auf einem Bildschirm, umwandelt,
- einem Display (22) das in das Gehäuse (21) der Displaymaus (20) integriert ist und auf der erfaßte, eingegebene und/ oder übermittelte Informationen visuell darstellbar sind,
- einer Eingabeeinheit (25, 26, 27) mit wenigstens einer Tastenfunktion und
- einer dem Display (22) zugeordneten Rechnereinheit, die mit einem oder mehreren Servern einer Informationsdatenbank (2), im weiteren als Ereignisportal (1) bezeichnet, deren Elemente jeweils wenigstens eine Information, einen Zeitpunkt einer Informationseinspielung sowie eine der Information zugehörige Adresse innerhalb des Netzwerkes enthalten, derart in Datenverbindung schaltbar ist, daß zumindest ein Teil der Informationen der Datenbankelemente in Abhängigkeit der Korrelation mit einem, vorzugsweise auf dem oder den Servern, hinterlegten, der Vorrichtung individuell zugeordneten Informationsprofil (3), vorzugsweise in Form eines Pop-Up-Menüs, zur Anzeige bringbar ist.

11. Displaymaus nach Anspruch 10, dadurch gekennzeichnet, daß die Rechnereinheit (36) ferner mit einer Speichereinheit zur Erkennung von Modems, ISDN-Karten oder sonstigen Internet- oder Intranetschnittstellen versehen ist und diese selbsttätig erkennt, sobald die Displaymaus (20) in Datenverbindung mit einem Rechner tritt und in einem Initialisierungsschritt eine Einwählroutine über die genannten Schnittstellen anlegt, die dann selbsttätig oder abrufbar im Betrieb der Displaymaus (20) abläuft.

12. Displaymaus nach Anspruch 10 oder 11, dadurch gekennzeichnet, daß mittels eines einzigen Tastendrucks, zum Zeitpunkt der schlagwortartigen Informationsdarstellung die der jeweils auf dem Display angezeigten Information zugeordnete Adresse, vorzugsweise die entsprechende URL, aufrufbar ist.

13. Displaymaus nach Anspruch 11 oder 12, dadurch gekennzeichnet, daß die Displaymaus (11, 20, 30, 50, 60, 70) zeit- intervall- oder ereignisgesteuert das Ereignisportal (1) abfragt und die im Wege dieser Abfrage gemäß dem hinterlegten Informationsprofil (3) zur Darstellung anstehenden Schlagwortinformationen auf dem Display (22, 40, 51, 61) zur Anzeige bringt.

14. Displaymaus nach Anspruch 13, dadurch gekennzeichnet, daß die Rechnereinheit (36) und der angeschlossene Programmspeicher derart programmiert sind, daß nach Inbetriebnahme der Displaymaus (22, 40, 50, 60, 70) eine selbsttätige Anwahl des Internets oder Intranets und anschließend eine gezielte Darstellung ausgewählter Informationen, vorzugsweise Online-Banking- oder Börseninformationen, erfolgt.

15. Displaymaus nach Anspruch 14, dadurch gekennzeichnet, daß bei entsprechender Voreinstellung des Informationsprofils (3) zumindest ausgewählte Banktransaktionen, vorzugsweise Bezahlvorgänge im elektronischen Zahlungsverkehr, auf dem Display (22, 40, 51, 61) zur Bestätigung und/oder Freigabe anzeigbar sind.

16. Displaymaus nach einem der vorhergehenden Ansprüche, dadurch gekennzeichnet, daß der Bewegungsdetektor Mittel zum berührungsfreien Erfassen der Displaymausbewegung relativ zu einer Oberfläche, vorzugsweise einen optischen Sensor oder einen Beschleunigungssensor, aufweist.

17. Displaymaus nach einem der vorhergehenden Ansprüche, dadurch gekennzeichnet, daß die Displaymaus (20, 30, 50, 60, 70) mit einem ID-Chip, vorzugsweise einem Krypto-ID-Chip zur eindeutigen Authentifizierung der jeweiligen Displaymaus (20, 30, 50, 60, 70) mittels einer eindeutigen Mauskennung versehen ist.

18. Displaymaus nach Anspruch 17, dadurch gekennzeichnet, daß eine eindeutige Authentifikation des Benutzers (4) mittels der Mauskennung in Verbindung mit einem eindeutigen Passwort, vorzugsweise eingebbar über die Displaymaus (20, 30, 50, 60, 70), erfolgt.

19. Displaymaus nach einem der vorhergehenden Ansprüche, dadurch gekennzeichnet, daß die Displaymaus (20, 30, 50, 60, 70) zur phonetischen Eingabe von Steuerungsbefehlen mit einem Mikrophon und einer an dieses angeschlossenen Konversionselektronik versehen ist, die vorgegebene oder empfangene phonetische Signale in vorbestimmte Steuerungssignale umsetzt.

20. Displaymaus nach einem der vorhergehenden Ansprüche, dadurch gekennzeichnet, daß die Displaymaus (20, 30, 50, 60, 70) zur Übermittlung elektronischer Daten an und von einem externen Rechner mit einer ― vorzugsweise seriellen ― Schnittstelle, einem USB-Port und/oder einer Infrarotschnittstelle versehen ist.

21. Displaymaus nach einem der vorhergehenden Ansprüche, dadurch gekennzeichnet, daß innerhalb der der Rechnereinheit zugeordneten Speichereinheit die zur Fernbedienung eines, vorzugsweise mittels einer Set-Top-Box mit dem Internet verbindbaren, Fernsehempfämgers erforderlichen Signale, insbesondere das Ein/AUS-Signal gespeichert ist und hierdurch mittels der Fernsehempfänger drahtlos fernbedienbar ist.

22. Displaymaus nach Anspruch 21, dadurch gekennzeichnet, daß die Bedienung des Fernsehempfängers mit der von der Displaymaus (60) empfangenen, vorzugweise dargestellten Information, gekoppelt ist, wobei vorzugsweise gemäß dem Informationsprofil auf dem Display (61) angebotene Fernsehsendungen gezielt einschaltbar sind.

23. Displaymaus nach einem der vorstehenden Ansprüche, dadurch gekennzeichnet, daß in das Gehäuse (21) zusätzlich eine Mobilfunkempfangseinheit sowie eine geeignete externe Stromversorgung derart integriert ist, daß die Displaymaus um die Funktionalität eines Mobiltelefons zur Handy-Displaymaus (50) erweitert ist.

24. Displaymaus nach einem der vorstehenden Ansprüche, dadurch gekennzeichnet, daß das Gehäuse der Displaymaus (30) derart zweiteilig aufgebaut ist, daß ein Displaygehäuse (32) gelenkig mit einem Bediengehäuse (31) verbunden ist.

25. Displaymaus nach Anspruch 24, dadurch gekennzeichnet, daß das Displaygehäuse (32) an seiner Breitseite mit einem Display (40), vorzugsweise einem mehrzeiligen Matrix-Display, und an seiner Schmalseite mit dem Objektiv (41) einer Kamera versehen ist.

26. Displaymaus nach Anspruch 25, dadurch gekennzeichnet, daß mittels eines im Bereich des Drehgelenks (33) angeordneten Kontaktschalters in Abhängigkeit von der jeweiligen Verschwenkung des Displaygehäuses (32) relativ zum Bediengehäuse (31) zwischen einer Nah― und einer Fernfokussierung der Kamera selbsttätig umschaltbar ist.

27. Displaymaus nach einem der vorhergehenden Ansprüche, dadurch gekennzeichnet, daß innerhalb des Gehäuses wenigstens ein Lautsprecher und/oder wenigstens ein Mikrophon angeordnet ist.

28. Displaymaus nach Anspruch 27, dadurch gekennzeichnet, daß die Displaymaus (30) mittels der Rechnereinheit und eines in einem Speicherelement der Displaymaus oder des anzuschließenden Computers abgelegten Software-Tools zur Internet-Telefonie geeignet ist.

29. Displaymaus nach einem oder mehreren der vorhergehenden Ansprüche 25-28, dadurch gekennzeichnet, daß mittels der Rechnereinheit und einer im Speicherelement der Displaymaus (30) oder im Speicher des anzuschließenden Computers abgelegten Bildbearbeitungs―Software eine Bearbeitung der mittels des optoelektronischen Sensors erfaßten Bildinformationen möglich ist.

30. Displaymaus nach Anspruch 29, dadurch gekennzeichnet, daß mittels des optoelektronischen Sensors eine Irisabtastung und -auswertung zur Benutzeridentifiktion gegeben ist.

31. Displaymaus nach einem der vorhergehenden Ansprüche, dadurch gekennzeichnet, daß mittels der Prozessoreinheit (36) und einer im Speicherelement der Displaymaus (30) und/oder im Speicher des anzuschließenden Computers abgelegten Texterkennungs-Software eine Texterkennung mittels der Displaymaus (30) möglich ist.

32. Displaymaus nach einem der vorhergehenden Ansprüche dadurch gekennzeichnet, daß die Displaymaus (70) eine Lese/Schreibvorrichtung zum Einlesen und/oder Auslesen von Informationen von einer bzw. in eine Informationsträgerkarte (71) aufweist.

33. Displaymaus nach Anspruch 32, dadurch gekennzeichnet, daß das Gehäuse (21) einen das Einbringen der Informationsträgerkarte (71) und das Wiederentnehmen derselben ermöglichenden Aufnahmeschacht (72) für die Informationsträgerkarte (71) aufweist.

34. Displaymaus nach Anspruch 33, dadurch gekennzeichnet, daß der Aufnahmeschacht (72) die Aufnahme der Informationsträgerkarte (71) derart ermöglicht, daß die in den Aufnahmeschacht (72) eingebrachte Karte (71) vollständig innerhalb des Gehäuses angeordnet ist.

35. Displaymaus nach einem der Ansprüche 33 bis 34, dadurch gekennzeichnet, daß ein von der Gehäuseaußenseite her betätigbares Betätigungselement zum wenigstens teilweisen Auswurf der Informationsträgerkarte (71) aus dem Aufnahmeschacht (72) vorgesehen ist.

36. Displaymaus nach einem der Ansprüche 33 bis 35, dadurch gekennzeichnet, daß sie das Einlesen und/oder Auslesen von personenbezogenen Informationen, insbesondere Patientendaten, von der bzw. in die Informationsträgerkarte (71) mittels der Lese―/ Schreibvorrichtung ermöglicht ist.

37. Displaymaus nach Anspruch 36, dadurch gekennzeichnet, daß die Lesevorrichtung derart gestaltet ist, daß sie das Einlesen und/oder Auslesen von Sicherheitsschlüsseln, wie PIN―Schlüsseln und/oder einer asymmetrischen Verschlüsselung zugeordneten Schlüsseln von der bzw. in die Informationsträgerkarte (71) ermöglicht.
